(19) Europäisches Patentamt
European Patent Office
Office européen des brevets

(11) Veröffentlichungsnummer: **0 000 381**
**B1**

(12) # EUROPÄISCHE PATENTSCHRIFT

(21) Anmeldenummer: **78100323.1**

(22) Anmeldetag: **07.07.78**

(51) Int. Cl.³: **C 08 G 18/10,**
C 08 G 18/32,
C 08 G 18/30

(54) **Verfahren zur Herstellung von seitenständige Hydroxylgruppen aufweisenden Isocyanat-Polyadditionsprodukten und die nach diesem Verfahren erhaltenen Produkte**

(30) Priorität: **15.07.77 DE 2732131**

(43) Veröffentlichungstag der Anmeldung:
**24.01.79 Patentblatt 79 02**

(45) Bekanntmachung des Hinweises auf die Patenterteilung:
**06.08.80 Patentblatt 80 16**

(84) Benannte Vertragsstaaten:
**BE DE FR GB NL**

(73) Patentinhaber: **Bayer AG**
**Zentralbereich Patente, Marken und Lizenzen**
**D-5090 Leverkusen 1, Bayerwerk (DE)**

(72) Erfinder: **Noll, Klaus, Dr.**
**Morgengraben 6**
**D-5000 Koeln 80 (DE)**
**Nachtkamp, Klaus, Dr.**
**Im Odinshof 17**
**D-5060 Bergisch-Gladbach (DE)**
**Pedain, Josef, Dr.**
**Haferkamp 6**
**D-5000 Koeln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 000 381 B1

# Verfahren zur Herstellung von seitenständige Hydroxylgruppen aufweisenden Isocyanat-Polyadditionsprodukten und die nach diesem Verfahren erhältenen Produkte

Die vorliegende Erfindung betrifft ein neues Verfahren zur Herstellung von neuen, seitenständige Hydroxylgruppen aufweisenden Isocyanat-Polyadditionsprodukten sowie die nach diesem Verfahren erhältlichen Verbindungen.

Das erfindungsgemäße Verfahren beruht auf dem Prinzip der Umsetzung von Isocyanatgruppen und Oxazolidingruppen aufweisenden Reaktivsystemen mit Wasser, wobei die Kettenverlängerungsreaktion im wesentlichen unter Ausbildung von Harnstoffgruppen aus den Isocyanatgruppen und den aus den Oxazolidinen hydrolytisch freigesetzten Aminogruppen erfolgt, während die bei der hydrolytischen Spaltung der Oxazolidingruppen sich ebenfalls bildenden vergleichsweise reaktionsträgen Hydroxylgruppen an der Reaktion nicht teilhaben und seitenständig in den Verfahrensprodukten vorliegen.

Das Prinzip der Vernetzung von Isocyanatgruppen und Oxazolidingruppen aufweisender Reaktivsysteme unter dem Einfluß von Feuchtigkeit ist bereits aus zahlreichen Veröffentlichungen bekannt (vgl. z.B. DE—A 1 952 091, 1, 952 092, 2 018 233, 2 446 438, 2 458 588 bzw. US—A 3 661 923, 3 743 626, 3 864 335 oder 4 002 601). Bei den Kompositionen dieser Veröffentlichungen handelt es sich im allgemeinen um in Abwesenheit von Feuchtigkeit lagerstabile Oxazolidine und Isocyanate aufweisende Systeme, die unter dem Einfluß von Luftfeuchtigkeit, d.h. unter dem Einfluß von Wasserspuren zu hochmolekularen vernetzten Gebilden reagieren. Durch den langsamen Zutritt des Wassers in Form von Luftfeuchtigkeit bedingt reagieren dabei sowohl die Aminogruppen als auch die Hydroxylgruppen des hydrolytisch gespaltenen Oxazolidins mit den Isocyanatgruppen ab. Dies führt daher auch weniger zu Kettenverlängerungsreaktionen als zu echten Vernetzungen der Polyisocyanatkomponente, wobei in den entstehenden Verfahrensprodukten praktisch keine seitenständigen Hydroxylgruppen mehr vorliegen. Irgendwelche Hinweise auf das nachstehend beschriebene erfindungsgemäße Verfahren sind den genannten Veröffentlichungen nicht zu entnehmen.

Gegenstand der vorliegenden Erfindung ist ein Verfahren zur Herstellung von im wesentlichen linearen Isocyanat-Polyadditionsprodukten mit seitenständigen Hydroxylgruppen durch Umsetzung von freie Isocyanatgruppen und Oxazolidingruppen aufweisenden Reaktivsystemen mit Wasser, dadurch gekennzeichnet, daß man

a) im wesentlichen lineare Präpolymere, welche endständig sowohl Isocyanatgruppen als auch Oxazolidingruppen oder

b) ein im wesentlichen lineare NCO-Präpolymere und Bis-oxazolidine aufweisendes Gemisch

durch Vermischen mit Wasser kettenverlängert, wobei die Wassermenge so bemessen wird, daß pro Mol an im Reaktionsgemisch vorliegenden Oxazolidingruppen mindestens 1 Mol Wasser vorliegt.

Gegenstand der vorliegenden Erfindung ist insbesondere auch eine Ausführungsform dieses Verfahrens, bei welcher man als Präpolymere hydrophil modifizierte und/oder einen externen Emulgator enthaltende Präpolymere und einen bezüglich der Kettenverlängerungsreaktion hohen Wasserüberschuß verwendet, so daß unmittelbar eine wäßrige Dispersion bzw. Lösung der Polyadditionsprodukte erhalten wird.

Durch das erfindungsgemäße Verfahren wird erstmals eine Möglichkeit eröffnet, gezielt vorwiegend lineare und daher in gängigen Lösungsmitteln lösliche Polyurethane herzustellen, welche seitenständige Hydroxylgruppen aufweisen und daher einer nachträglichen Vernetzungsreaktion beispielsweise mit organischen Polyisocyanaten zugänglich sind. Wegen ihrer linearen Struktur sind die erfindungsgemäßen Verfahrensprodukte bei gleichzeitigem Einbau von hydrophilen Gruppen und/oder bei Mitverwendung von externen Emulgatoren auch ohne Schwierigkeit in wäßrige Dispersionen oder Lösungen überführbar, aus denem dann ebenfalls nachträglich einfach vernetzbare Flächengebilde hergestellt werden können.

Ausgangsmaterialien für das erfindungsgemäße Verfahren sind im wesentlichen lineare, im statitischen Mittel 1,8 bis 2,2, vorzugsweise 2, endständige Isocyanatgruppen aufweisende Präpolymere, welche im allgemeinen ein mittleres Molekulargewicht von 500 bis 10 000, vorzugsweise 800 bis 4 000, aufweisen.

Die Herstellung der NCO-Präpolymeren erfolgt nach bekannten Methoden der Polyurethanchemie durch Umsetzung überschüssiger Mengen an organischen Polyisocyanaten, vorzugsweise Diisocyanaten, mit geeigneten, vorzugsweise difunktionellen, Verbindungen mit gegenüber Isocyanatgruppen reationsfähigen Gruppen. Ausgangsmaterialien zur Herstellung der NCO-Präpolymeren sind demzufolge.

1. beliebige organische Polyisocyanate, vorzugsweise Diisocyanate der Formel

$$Q(NCO)_2$$

wobei Q für einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind

Tetramethylendiisocyanat, Hexamethylendiisocyanat, Dodecamethylendiisocyanat, 1,4 - Diisocyanato - cyclohexan, 1 - Isocyanato - 3,3,5 - trimethyl - 5 - isocyanatomethylcyclohexan, 4,4' - Diisocyanatodicyclohexylmethan, 4,4' - Diisocyanato - dicyclohexylpropan - (2,2), 1,4 - Diisocyanatobenzol, 2,4 - Diisocyanatotoluol, 2,6 - Diisocyanatotoluol, 4,4' - Diisocyanatodiphenylmethan, 4,4' - Diisocyanato - diphenylpropan - (2,2), p - Xylylen - diisocyanat oder $\alpha, \alpha, \alpha', \alpha'$ - Tetramethyl - m - oder p - xylylen - diisocyanat, sowie aus diesen Verbindungen bestehende Gemische.

Es ist selbstverständlich auch möglich, die in der Polyurethan-Chemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate (mit) zuverwenden.

2. Beliebige organische Verbindungen mit mindestens zwei gegenüber Isocyanatgruppen reaktionsfähigen Gruppen, insbesondere insgesamt zwei Aminogruppen, Thiolgruppen, Carboxylgruppen und/oder Hydroxylgruppen aufweisende organische Verbindungen des Molekulargewichtsbereichs 62—10.000, vorzugsweise 1.000 bis 6.000. Bevorzugt werden die entsprechenden Dihydroxyverbindungen eingesetzt. Die Mitverwendung von im Sinne der Isocyanat-Polyadditionsreaktion tri- oder höherfunktionellen Verbindungen in geringen Anteilen zur Erzielung eines gewissen Verzweigungsgrades ist ebenso möglich wie die bereits erwähnte mögliche Mitverwendung von tri- oder höherfunktionellen Polyisocyanaten zum gleichen Zweck.

Vorzugsweise einzusetzende Hydroxylverbindungen sind die in der Polyurethan-Chemie an sich bekannten Hydroxypolyester, Hydroxypolyäther, Hydroxypolythioäther, Hydroxypolyacetale, Hydroxypolycarbonate und/oder Hydroxypolyesteramide. Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester, Terephthalsäure - bis - glykolester. Als mehrwertige Alkohole kommen z.B. Äthylenglykol, Propylenglykol - (1,2) und - (1,3), Butylenglykol - (1,4) und - (2,3), Hexandiol - (1,6), Octandiol - (1,8), Neopentylglykol - Cyclohexandimethanol - (1,4 - Bis - hydroxymethylcyclohexan), 2 - Methyl - 1,3 - propandiol, Glycerin, Trimethylolpropan, Hexantriol - (1,2,6), Butantriol - (1,2,4), Trimethyloläthan, Pentaerythrit, Chinit, Mannit und Sorbit, Methylglykosid, ferner Diäthylenglykol, Triäthylenglykol, Tetraäthylenglykol, Polyäthylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. $\varepsilon$-Caprolacton oder Hydroxycarbonsäuren, z.B. $\omega$-Hydroxycapronsäure, sind einsetzbar.

Auch die erfindungsgemäß in Frage kommenden, vorzugsweise zwei Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsföhigen Wasserstoffatomen wie Alkohole und Amine, z.B. Wasser, Äthylenglykol, Propylenglykol - (1,3) oder - (1,2), 4,4' - Dihydroxy - diphenylpropan, Anilin, hergestellt.

Auch durch Vinylpolymerisate modifizierte Polyäther, wie sie z.B. durch Polymerisation von Styrol, Acrylnitril in Gegenwart von Polyäthern entstehen (amerikanische Patentschriften 3 383 351, 3 304 273, 3 523 093, 3 110 695, deutsche Patentschrift 1 152 536), sind ebenfalls geeignet. Die anteilig gegebenenfalls mitzuverwendenden höherfunktionellen Polyäther entstehen in analoger Weise durch an sich bekannte Alkoxylierung von höherfunktionellen Startermolekülen z.B. Ammoniak Äthanolamin, Äthylendiamin oder Sukrose.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den CO-Komponenten handelt es sich bei den Produkten um Polythiomischäther, Polythioätherester, Polythioätheresteramide.

Als Polyacetale kommen z.B. die aus Glykolen, wie Diäthylenglykol, Triäthylenglykol, 4,4' - Diäthoxy - diphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht. die z.B. durch Umsetzung von Diolen wie Propandiol - (1,3), Butandiol - (1,4) und/oder

Hexandiol - (1,6), Diäthylenglykol, Triäthylenglykol, Tetraäthylenglykol mit Diarylcarbonaten, z.B. Diphenylcarbonat, oder Phosgen, hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate. Auch bereits Urethan- oder Harnstoffgruppen enthaltende Polyhydroxylverbindungen sind verwendbar.

Auch niedermolekulare Polyole können (mit) verwendet werden, wie z.B. Äthandiol, Propandiol-1,2 und -1,3, Butandiol-1,4 und -1,3, Pentandiole, Hexandiole, Trimethylolpropan, Hexantriole, Glycerin und Pentaerythrit.

Vertreter der genannten im erfindungsgemäßen Verfahren zu verwendenden Polyisocyanat- und Hydroxyl-Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32—42 und Seiten 44—54 und Band II, 1964, Seiten 5—6 und 198—199, sowie im Kunststoff-Handbuch, Band VII, Vieweg-Höchtlen, Carl-Hanser-Verlag, München, 1966, z.B. auf den Seiten 45 bis 71, beschrieber.

Falls beim erfindungsgemäßen Verfahren gemäß der o.g. besonderen Ausführungsform hydrophil modifizierte Präpolymere zum Einsatz gelangen sollen, erfolgt deren Herstellung nach bekannten Verfahren des Standes der Technik beispielsweise gemäß den in DT—OS'en 1 495 745, 1 495 847, 2 446 440, 2 340 512, US—PS 3 479 310, GB—PS'en 1 158 088 oder 1 076 688 beschriebenen Methoden. Dies bedeutet, daß bei der Herstellung der Präpolymeren neben den bereits beispielhaft genannten Ausgangsmaterialien chemisch fixierte hydrophile Gruppen aufweisende, vorzugsweise im Sinne der Isocyanatadditionsreaktion mono- und insbesondere difunktionelle Aufbaukomponenten der beispielhaft in den o.g. Literaturstellen bezüglich der Herstellung von wäßrigen Polyurethandispersionen oder -lösungen beschriebenen Art, d.h. beispielsweise ionische bzw. potentielle ionische Gruppen aufweisende Diisocyanate, Diamine oder Dihydroxyverbindungen bzw. Polyäthylenoxideinheiten aufweisende Diisocyanate oder Glykole mitverwendet werden.

Zu den bevorzugten hydrophil modifizierten Aufbaukomponenten gehören insbesondere die Sulfonatgruppen aufweisenden aliphatischen Diole gemäß DE—A 2 446 440, die kationischen oder auch anionischen einbaufähigen inneren Emulgatoren gemäß deutscher Patentanmeldung P 26 51 506.0 und auch die in dieser Patentanmeldung beschriebenen, monofunktionellen einbaufähigen Polyäther.

Bei der Herstellung der NCO-Präpolymeren nach an sich bekannten Prinzipien des Standes der Technik werden die Reaktionspartner im allgemeinen in solchen Mengenverhältnissen eingesetzt, die einem Verhältnis von Isocyanatgruppen zu gegenüber NCO reaktiven Wasserstoffatomen, vorzugsweise aus Hydroxylgruppen, von 1,05 bis 10, vorzugsweise von 1,1 bis 3 entsprechen.

Die Reihenfolge der Zugabe der einzelnen Reaktionspartner ist hierbei weitgehend beliebig. Man kann sowohl die Hydroxylverbindungen abmischen und dazu das Polyisocyanat zufügen oder auch zur Polyisocyanatkomponente das Gemisch der Hydroxylverbindungen oder die einzelnen Hydroxylverbindungen nach und nach eintragen.

Die Herstellung der NCO-Präpolymere erfolgt vorzugsweise in der Schmelze bei 30 bis 190°C, vorzugsweise bei 50 bis 120°C. Die Herstellung der Präpolymere könnte selbstverständlich auch in Gegenwart von organischen Lösungsmitteln erfolgen.

Geeignete Lösungsmittel, die z.B. in einer Menge bis zu 25 Gew.-%, bezogen auf den Feststoff, eingesetzt werden können, wären z.B. Aceton, Methyläthylketon, Essigsäureäthylester, Dimethylformamid oder Cyclohexanon.

Die Art und Mengenverhältnisse der bei der Herstellung der NCO-Präpolymeren eingesetzten Ausgangsmaterialien werden im übrigen vorzugsweise so gewählt, daß die NCO-Präpolymeren

a) eine mittlere NCO-Funktionalität von 1,8 bis 2,2, vorzugsweise 2,

b) einen Gehalt an kationischen oder anionischen eingebauten Gruppen von 0 bis 100, vorzugsweise 0,1 bis 100 und insbesondere 0,5 bis 50 Milli-Äquivalent pro 100 g Feststoff,

c) einen Gehalt an seitenständig, endständig und/oder innerhalb der Hauptkette eingebauten, innerhalb eines Polyäthersegments vorliegenden Äthylenoxid-Einheiten von 0 bis 30, vorzugsweise 0,5 bis 30 und insbesondere 1 bis 20 Gew.-%, bezogen auf das Gesamtgewicht des Präpolymeren und

d) ein mittleres Molekulargewicht von 500 bis 10.000, vorzugsweise 800 bis 4.000 aufweisen.

Zu den bevorzugten NCO-Präpolymeren gehören, wie bereits dargelegt, solche, welche entweder ionische Gruppen der unter b) genannten Art, d.h. insbesondere $-COO^-$, $-SO_3^-$ oder $= N^+ =$, oder nichtionische Gruppen der unter c) genannten Art oder sowohl ionische als auch nichtionische Gruppen der genannten Art aufweisen. Es ist jedoch auch möglich, beim erfindungsgemäßen Verfahren NCO-Präpolymere einzusetzen, bei deren Herstellung keine der genannten hydrophilen Aufbaukomponenten mitverwendet wurden, bei denen der Gehalt der oben unter b) bzw. c) genannten Gruppen somit 0 beträgt.

Im Falle der Verwendung derartiger NCO-Präpolymerer, die im übrigen die oben unter a) und d) genannten Eigenschaften aufweisen, ist die Herstellung von wäßrigen Dispersionen bzw. Lösungen der erfingungsgemäßen Verfahrensprodukte bei der Durchführung des erfindungsgemäßen Verfahrens nur

möglich, falls externe Emulgatoren mitverwendet werden. Geeignete derartige Emulgatoren sind beispielsweise von R. Heusch in "Emulsionen", Ullmann, Band 10, Seiten 449—473, Weinheim 1975, beschrieben. Geeignet sind sowohl ionische Emulgatoren wie z.B. Alkali- und Ammoniumsalze von langkettigen Fettsäuren oder langkettigen Aryl(Alkyl)sulfonsäuren, als auch nichtionische Emulgatoren wie z.B. äthoxylierte Alkylbenzole mit einem mittleren Molgewicht von 500 bis 10 000.

Diese externen Emulgatoren werden vor der Durchführung des erfindungsgemäßen Verfahrens mit den NCO-Präpolymeren innig durchmischt. Sie gelangen im allgemeinen in Mengen von 1 bis 30, vorzugsweise 5 bis 20 Gew.-%, bezogen auf das Gewicht des NCO-Präpolymeren zum Einsatz. Es ist durchaus möglich, auch bei Verwendung von hydrophil modifizierten NCO-Präpolymeren deren Hydrophilie durch zusätzliche Mitverwendung derartiger externer Emulgatoren zu erhöhen, obwohl dies im allgemeinen nicht erforderlich ist.

Wie bereits dargelegt, ist der Einbau hydrophiler Gruppen bzw. die Mitverwendung externer Emulgatoren bei der Durchführung des erfindungsgemäßen Verfahrens nicht unbedingt erforderlich, sondern erfolgt im allgemeinen nur dann, wenn die erfindungsgemäßen Verfahrensprodukte in Form wäßriger Dispersionen bzw. Lösungen erhalten werden sollen. Es ist somit durchaus denkbar, das erfindungsgemäße Verfahren beispielsweise in dem oben beispielhaft genannten Lösungsmittel durchzuführen, wobei dann Lösungen der erfindungsgemäßen Verfahrensprodukte in diesen Lösungsmitteln erhalten werden.

Die oben beispielhaft genannten NCO-Präpolymeren mit 1,8—2,2, vorzugsweise 2, endständigen Isocyanatgruppen kommen beim erfindungsgemäßen Verfahren vorzugsweise im Gemisch mit Bisoxazolidinen zum Einsatz. Unter "Bisoxazolidinen" sind hierbei beliebige organische Verbindungen zu verstehen, die 2, unter dem Einfluß von Wasser eine Hydroxyl- und eine sekundäre Aminogruppe bildende, Oxazolidingruppen aufweisen und ansonsten unter den Bedingungen des erfindungsgemäßen Verfahrens inert sind. Zu den bevorzugten Bisoxazolidinen gehören solche, welche 2 Gruppen der Formel

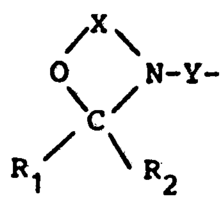

aufweisen, wobei

$R_1$ und $R_2$ für gleiche oder verschiedene Reste stehen und Wasserstoff, aliphatische Kohlenwasserstoffreste mit 1—4 Kohlenstoffatomen, cycloaliphatische Kohlenwasserstoffreste mit 5—7 Kohlenstoffatomen oder aromatische Kohlenwasserstoffreste mit 6—10 Kohlenstoffatomen bedeuten bzw. zusammen mit dem Ring-Kohlenstoffatom gemeinsam einen 5- oder 6-gliedrigen cycloaliphatischen Kohlenwasserstoff-Ring bilden können,

X für einen Rest der Formel

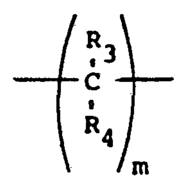

steht, wobei $R_3$ und $R_4$ für gleiche oder verschiedene Reste stehen und $C_1$—$C_4$-Alkylreste, vorzugsweise jedoch Wasserstoff bedeuten und m 2 oder 3 bedeuten,

Y für einen Rest der Formel

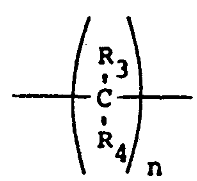

steht, in welcher $R_3$ und $R_4$ die bereits genannte Bedeutung haben und n für eine ganze Zahl von 2 bis 6 steht.

Zu den besonders bevorzugten Bisoxazolidinen gehören solche in welchen 2 Reste der o.g. Formel über einen zweiwertigen Rest der Formel

—A—Z—A'—

verknüpft sind, wobei

A und A' für gleiche oder verschiedene Reste stehen und —COO— oder —OCO—NH— bedeuten und

Z für einen zweiwertigen aliphatischen Kohlenwasserstoffrest mit 2—14 Kohlenstoffatomen, einen zweiwertigen cycloaliphatischen Kohlenwasserstoffrest mit 5—14 Kohlenstoffatomen oder einen Arylenrest mit 6—15 Kohlenstoffatomen steht.

Beim erfindungsgemäßen Verfahren werden entweder Gemische der beispielhaft genannten NCO-Präpolymeren mit den beispielhaft genannten Bisoxazolidinen oder aber überwiegend lineare Isocanatgruppen und Oxazolidingruppen aufweisende Präpolymere eingesetzt.

Diese letztgenannten Präpolymeren können auf einfache Weise durch Umsetzung der oben beispielhaft genannten vorwiegend difunktionellen NCO-Präpolymeren mit Hydroxylgruppen aufweisendenden Oxazolidinen der Formel

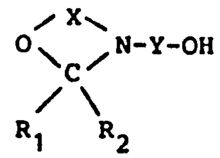

in welcher

$R_1$, $R_2$, X und Y die bereits genannte Bedeutung haben, hergestellt werden.

Bei dieser Herstellung der Isocyanatgruppen und Oxazolidine aufweisenden Präpolymeren gelangen die Reaktionspartner vorzugsweise in solchen Mengenverhältnissen zum Einsatz, daß auf jedes Mol Isocyanatgruppen des NCO-Präpolymeren 0,37—0,53, vorzugsweise 0,4—0,51 Mol Hydroxylgruppen des Hydroxyoxyzolidins entfallen. Auf diese werden Reaktionsgemische erhalten, welche pro verbleibender Isocyanatgruppe ca. 0,6—1,1, vorzugsweise ca. 0,65—1,05 Oxazolidingruppen aufweisen. Da es sich bei den Monohydroxyoxazolidinen um monofunktionelle Verbindungen handelt, tritt bei dieser Umsetzung keine Molekülvergrößerung spürbaren Ausmaßes ein. Auch bei den Umsetzungsprodukten handelt es sich somit ebenso wie bei den als Ausgangsmaterialien eingesetzten NCO—Präpolymeren um im wesentlichen lineare Verbindungen.

Sowohl bei den Hydroxyoxazolidinen als auch bei den genannten Bisoxazolidinen handelt es sich um literaturbekannte Verbindungen (vgl. z.B. die eingangs bezüglich der feuchtigkeitshärtenden Oxazolidin-Kompositionen des Standes der Technik genannten Literaturstellen). Besonders bevorzugt einzusetzende Bisoxazolidine bzw. Hydroxyoxazolidine sind die entsprechenden in US—PS 4 002 601 bzw. DE—A 2 446 438 genannten Verbindungen.

Die N-Hydroxyalkyl-oxazolidine werden nach literaturbekannten Methoden hergestellt, wobei ein Keton oder ein Aldehyd unter cyclisierender Dehydratisierung mit einem Bis-(hydroxyalkyl)-amin kondensiert wird und das Reaktionswasser üblicherweise durch ein inertes Schleppmittel bzw. durch die im Überschuß eingesetzte Carbonylverbindung azeotrop entfernt wird.

Als Carbonylverbindungen

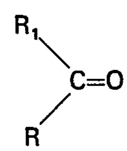

eignen sich insbesondere nachstehend aufgeführte Aldehyde und Ketone:

Formaldehyd, Acetaldehyd, Propionaldehyd, Butyraldehyd, Isobutyraldehyd, Benzaldehyd, Tetrahydrobenzaldehyd, Aceton, Methyläthylketon, Methylpropylketon, Methylisopropylketon, Diäthylketon, Methylbutylketon, Methylisobutylketon, Methyl-t-butylketon, Diisobutylketon, Cyclopentanon und Cyclohexanon. Bevorzugt einzusetzende Carbonylverbindungen sind entsprechend der vorstehenden Definition der bevorzugten Reste $R_1$ und $R_2$ Formaldehyd sowie die genannten aliphatischen Aldehyde bzw. Ketone.

Als Bis-(hydroxyalkyl)-amine

HO—X—NH—Y—OH

eignen sich besonders Bis-(2-hydroxyäthyl)-amin und Bis-(2-hydroxypropyl)-amin. Im Prinzip ebenso geeignet sind jedoch auch beispielsweise Bis-(2-hydroxybutyl)-amin, Bis-(2-hydroxyhexyl)-amin, Bis-(3-hydroxyhexyl)-amin, oder N-(2-hydroxypropyl)-N-(6-hydroxyhexyl)-amin.

Ausgehend von den oben beschriebenen Hydroxyoxazolidinen lassen sich die erfindungsgemäß zu verwendenden, vorzugsweise Urethangruppen aufweisenden, Bisoxazolidine durch Umsetzung mit Diisocyanaten der Formel

OCN—Z—NCO

(in der Z die oben angegebene Bedeutung besitzt) z.B. Hexamethylendiisocyanat, 3,3,5-Trimethyl-5-isocyanatomethyl-cyclohexylisocyanat (IPDI), 4,4'-Diisocyanato-dicyclohexylmethan, 2,4- und 2,6-Diisocyanatotoluol oder 4,4'-Diisocyanatodiphenylmethan herstellen. Auch die Umsetzung mit Dicarbonsäuren, aliphatischer, cycloaliphatischer oder aromatischer Natur der Formel

HOOC—Z—COOH

führt zu efindungsgemäß einsetzbaren, Estergruppen aufweisenden Bisoxazolidinen.

Außer den Dicarbonsäuren können unter HCl-Abspaltung auch deren Bischloride oder unter Alkoholabspaltung deren Bis-ester eingesetzt werden. Darüber hinaus ist es möglich, vor diesen angeführten Dimerisierungsreaktionen die OH-Gruppe mit stöchiometrischen Mengen von Hydroxycarbonsäuren oder den entsprechenden Lactonen umzusetzen. Hier kommt der Einsatz von z.B. Hydroxypropionsäure, Hydroxybuttersäure, Hydroxycapronsäure usw., bzw. deren Lactonen in Frage. Diese zusätzliche Modifizierung ist jedoch weniger bevorzugt.

Bei der Durchführung des erfindungsgemäßen Verfahrens werden nun

a) die beispielhaft genannten Oxazolidin- und Isocyanatgruppen aufweisenden Präpolymeren oder

b) Gemische der beispielhaft genannten NCO-Präpolymeren mit den beispielhaft genannten Bisoxazolidinen, in welchen die Mengenverhältnisse der Komponenten im allgemeinen so gewählt sind, daß für jedes Mol Isocyanatgruppen 0,6 bis 1,1, vorzugsweise 0,65 bis 1,05, Mol Oxazolidingruppen vorliegen,

mit Wasser vermischt. Hierbei wird das Wasser nicht wie in den eingangs genannten Vorveröffentlichungen in Form von Luftfeuchtigkeit sondern in flüssiger Form eingesetzt. Wesentlich ist hierbei, daß die Wassermenge so bemessen wird, daß sie mindestens zur Hydrolyse der Oxazolidingruppen ausreicht, d.h. daß pro Mol Oxazolidingruppen mindestens 1 Mol Wasser zum Einsatz gelangt. Im allgemeinen wird man jedoch stets einen mindestens 100%igen Überschuß über diese Menge an Wasser einsetzen, selbst wenn nicht die Herstellung von wäßrigen Dispersionen oder Lösungen der erfindungsgemäßen Verfahrensprodukte sondern beispielsweise deren Lösungen in organischen Lösungsmitteln hergestellt werden sollen. Durch den Zusatz des Wassers in flüssiger Form und durch die genannte Wassermenge wird eine Additionsreaktion zwischen den Isocyanatgruppen und den aus den Oxazolidingruppen hydrolytisch gebildeten Hydroxylgruppen weitgehend ausgeschlossen, da selbst bei Verwendung eines Oxazolidin-Unterschusses bezogen auf Isocyanatgruppen dann stets eine Kettenverlängerungsreaktion zwischen den Isocyanatgruppen und dem überschüssig vorliegenden Wasser im Vergleich zur Additionsreaktion zwischen Isocyanatgruppen und Hydroxylgruppen vorrangig abläuft. Bei der Herstellung von wäßrigen Lösungen bzw. Dispersionen bei der Durchführung des erfindungsgemäßen Verfahrens wird das Wasser im allgemeinen in Mengen von 40 bis 900, vorzugsweise 55 bis 230 Gew.-%, bezogen auf Oxazolidin- und Isocyanatgruppen aufweisendes Reaktivsystem eingesetzt.

Bei der Herstellung von Lösungen der erfindungsgemäßen Verfahrensprodukte in organischen Lösungsmitteln wird bei der Durchführung des erfindungsgemäßen Verfahrens im allgemeinen wie folgt verfahren:

Das Isocyanatgruppen und Oxazolidingruppen aufweisende Reaktivgemisch wird in einem geeigneten Lösungsmittel, welches vorzugsweise mit Wasser mischbar sein sollte, zu einer 5 bis 95, vorzugsweise 20 bis 70 gew.-%igen Lösung gelöst. Zu dieser Lösung wird dann unter Rühren das Wasser als solches oder im Gemisch mit mit Wasser mischbarem Lösungsmittel zugesetzt. Die Temperatur hierbei liegt im allgemeinen zwischen 0 und 80°C. Es bildet sich dann sofort eine Lösung des erfindungsgemäßen Verfahrensprodukts in dem Lösungsmittel bzw. Lösungsmittel/Wasser-Gemisch. Geeignete Lösungsmittel sind beispielsweise Dimethylformamid, Dimethylsulfoxid, Aceton, Methyläthylketon oder aber auch Gemische von beispielsweise tertiären Alkoholen wie tert.-Butanol mit aromatischen Lösungsmitteln wie z.B. Toluol.

Bei der besonders bevorzugten Ausführungsform des erfindungsgemäßen Verfahrens unter gleichzeitiger Herstellung von wäßrigen Dispersionen bzw. Lösungen der erfindungsgemäßen Verfahrensprodukte in Wasser wird entweder das wie dargelegt hydrophil modifiziert oder einen externen Emulgator enthaltende Reaktivsystem, insbesondere falls es sich hier um eine Flüssigkeit handelt, direkt mit dem Wasser verrührt, oder man verfährt nach dem oben dargelegten Prinzip unter Mitverwendung eines Hilfslösungsmittels, wobei als Hilfslösungsmittel zweckmäßigerweise ein mit Wasser mischbares Lösungsmittel eines unter 100°C liegenden Siedepunktes verwendet wird, welches nach erfolgter erfindungsgemäßer Umsetzung destillativ entfernt werden kann. Bei dieser Herstellung von wäßrigen Dispersionen oder Lösungen erfolgt die Dispergierung bzw. Lösung der Präpolymeren und deren Kettenverlängerung praktisch simultan. Von entscheidendem Vorteil gegenüber den vorbekannten Verfahren des Standes der Technik zur lösungsmittelfreien bzw. -armen Herstellung von wäßrigen Polyurethandispersionen ist hierbei, daß bereits vor dem Zusammenbringen mit Wasser eine innige Durchmischung mit dem Kettenverlängerer erfolgt, bzw. bereits vor dem Zusammenbringen mit Wasser eine chemische Fixierung der kettenverlängernden Gruppe (Oxazolidingruppe) erfolgt, so daß die Kettenverlängerung zu besonders homogenen Produkten führt. Das erfindungsgemäße Verfahren eignet sich vorzüglich zur Herstellung von wäßrigen Dispersionen bzw. Lösungen,

die einen Feststoffgehalt von 10 bis 70, vorzugsweise 30 bis 65 Gew.-% aufweisen.

In den Dispersionen weisen die Teilchen der diskontinuierlichen Phase im allgemeinen Durchmesser von 50 bis 1000 nm auf. Auch die Herstellung von Solen mit mittlerem Teilchendurchmesser der diskontinuierlichen Phase von etwa 1—50 nm bzw. klaren, wäßrigen Lösungen, in welchen der Festkörper in molekulardisperser Form oder höchstens in Form von Assoziaten vorliegt, ist erfindungsgemäß möglich.

Ob beim erfindungsgemäßen Verfahren Lösungen oder Dispersionen der Polyurethane in Wasser erhalten werden, ist vor allem vom Molekulargewicht und der Hydrophilie der gelösten bzw. dispergierten Teilchen abhängig, welche ihrerseits durch geeignete Wahl von Art und Mengenverhältnis der Ausgangsmaterialien, insbesondere bei der Herstellung der NCO-Präpolymeren, nach den bekannten Prinzipien der Polyurethan-Chemie eingestellt werden können. So führt beispielsweise die Verwendung von einem NCO-Präpolymeren mit einer geringfügig unter 2 liegenden mittleren NCO-Funktionalität zu einem Abbruch der Polyadditionsreaktion, bevor allzu hohe Molekulargewichte erreicht sind. Die nach dem erfindungsgemäßen Verfahren hergestellten, in wäßriger Dispersion bzw. Lösung vorliegenden Polyurethane sind den bekannten in organischen Lösungsmitteln hergestellten Polyurethanen ebenbürtig. Aus ihnen hergestellte Filme weisen eine ausgezeichnete mechanische Festigkeit und Hydrolysebeständigkeit auf und können für die verschiedensten Einsatzgebiete verwendet werden.

Wegen der in den erfindungsgemäßen Verfahrensprodukten eingebauten seitenständigen Hydroxylgruppen lassen sich diese nach Formgebung beispielsweise durch Abdunsten des Lösungsmittels bzw. Wassers, nachdem der Lösung bzw. der Dispersion ein chemisch oder thermisch aktivierbares Vernetzungsmittel zugegeben worden war, vernetzen. Geeignete Vernetzungsmittel sind z.B. Polyisocyanate mit blockierten Isocyanatgruppen oder gegenüber Hydroxylgruppen reaktionsfähige Melaminharze. Auch bei einem Verzicht einer chemischen Vernetzung der erfindungsgemäßen Verfahrensprodukte über die seitenständigen Hydroxylgruppen können diese von Vorteil sein, da sie oft die physikalische Affinität der erfindungsgemäßen Verfahrensprodukte zu Substraten, die mit den erfindungsgemäßen Verbindungen beschichtet werden, erhöhen.

Alle in den nachfolgenden Beispielen genannten Teile sind Gewichtsteile.

## Beispiel 1

1237,5 Teile eines Polybutylenadipats (MG = 2250) und 191,3 Teile eines vierfach propoxylierten Adduktes aus 2-Butendiol-1,4 und Natriumbisulfit (MG = 425), im folgenden als "Addukt" bezeichnet, wurden bei 120°C im Wasserstrahlvakuum entwässert Zu diesem Gemisch wurden bei 70°C 488,4 Teile 1-Isocyanato-3-isocyanatomethyl-3,3,5-trimethylcyclohexan gegeben und die Mischung nach Anheben der Temperatur auf 100°C solange gerührt, bis der NCO-Gehalt der Schmelze 5,3% betrug. Nach Abkühlen auf 60°C wurden 437,4 Teile eines Bisoxazolidins der Formel

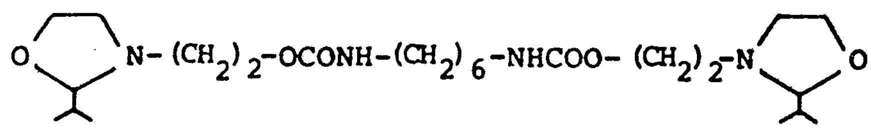

eingerührt und die Mischung anschließend unter kräftigem Rühren mit 5060 Teilen entionten Wassers versetzt. Die entstandene wäßrige Dispersion hatte einen Feststoffgehalt von 30% und eine Viskosität von 14 Sekunden (Fordbecher, 4 mm). Sie zeigte im durchscheinenden Licht einen Tyndall-Effekt. Die Dispersion trocknet zu einem klaren, farblosen und klebfreien Film auf, der folgende mechanische Daten besitzt:

Zugfestigkeit: 37,2 MPa
Bruchdehnung: 620%

330 Teile der Dispersion wurden mit 15 Teilen eines Hexamethyl/Butyloxymethylmelamins versetzt und zu einem Film vergossen. Nach der Trocknung wurde der Film 20 Minuten auf 130°C erhitzt. Die an diesem Film gemessenen mechanischen Werte waren:

Zugfestigkeit: 45,3 MPa
Bruckdehnung: 410%

Der Film war nach dem Befeuchten mit Toluol und Aceton nicht klebrig und löste sich in heißem DMF nicht auf.

## Beispiel 2

Das NCO-Präpolymer aus Beispiel 1 wurde bei 60°C mit 361,8 Teilen eines Bisoxazolidins der Formel

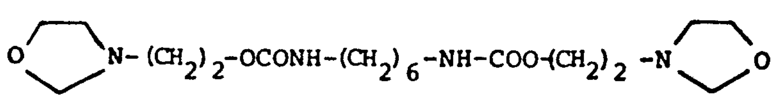

versetzt. Unter kräftigem Rühren wurden 5100 Teilen entionten Wassers zugegeben. Die entstandene

Dispersion hatte einen Festkörpergehalt von 30% und eine Viskosität von 18 Sekunden (Fordbecher, 4 mm). Sie zeigte im durchscheinenden Licht einen Tyndall-Effekt.

Die Dispersion trocknet zu einem klaren, farblosen und klebfreien Film auf, der nach völliger Entfernung des Wassers eine Shore-A-Härte von 78 aufwies. Nach 20-minütigem Erhitzen auf 130°C war die Härte auf 85 (Shore-A) angestiegen und der Film in heißem DMF nur noch quellbar, jedoch nicht mehr löslich.

Beispiel 3

600 Teile eines Polyäthanoldiolphthalates (MG = 2000) und 525 Teile eines Polyäthandiolphthalatadipates (MG = 1750) sowie 170,4 Teile des in Beispiel 1 beschriebenen Adduktes wurden bei 120°C im Wasserstrahlvakuum entwässert. Zu diesem Gemisch wurden bei 70°C 285,6 Teile Hexamethylendiisocyanat gegeben und die Mischung nach Anheben der Temperatur auf 100°C solange gerührt, bis der NCO-Gehalt der Schmelze 4,8% betrug. Nach dem Abkühlen auf 80°C wurden 209 Teile eines Oxazolidins der Formel

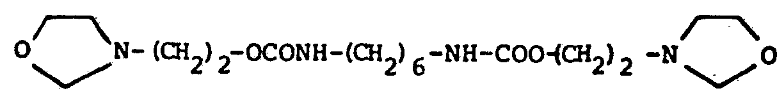

eingerührt und die Mischung anschließend unter kräftigem Rühren mit 4070 Teilen entionten Wassers versetzt. Die entstandene wäßrige Dispersion hatte einen Feststoffgehalt von 30% und eine Viskosität von 15 Sekunden (Fordbecher, 4 mm). Die Dispersion zeigte im durchscheinenden Licht einen Tyndall-Effekt. Die Dispersion trocknete nach dem Vergießen zu einem klaren, harten Film auf, der jedoch mit dem Fingernagel leicht zu ritzen war. Die Bleistifthärte betrug HB—H. Nach 20-minütigem Erhitzen auf 130°C war die die auf 3 H angestiegen.

Beispiel 4

300 Teile eines Polyäthandiolphthalats (MG = 2000) und 612,5 Teile eines Polyäthandiolphthalatadipates (MG = 1750) sowie 13,4 Teile 1,1,1-Trishydroxymethylpropan und 148,8 Teile des in Beispiel 1 beschriebenen Addukt wurden bei 120°C im Wasserstrahlvakuum entwässert. Zu diesem Gemisch wurden bei 70°C 285,6 Teile Hexamethylendiisocyanat gegeben und die Mischung nach Anheben der Temperatur auf 100°C solange gerührt, bis der NCO-Gehalt der Schmelze 4,3% betrug. Nach dem Abkühlen auf 80°C wurden 252,7 Teile eines Oxazolidins der Formel

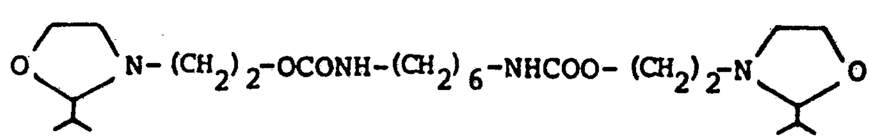

eingerührt und die Mischung anschließend unter kräftigem Rühren mit 2230 Teilen entionten Wassers versetzt. Es entstand eine wäßrige Dispersion mit einem Feststoffgehalt von 40% und einer Viskosität von 20 Sekunden (Fordbecher, 4 mm). Die Disperion zeigte im durchscheinenden Licht einen Tyndall-Effekt.

Beispiel 5

1000 Teile eines Äthandiol/Butandiol-1,4/Diäthylenglykolpolyadipates (MG = 2000) sowie 1100 Teile eines Adduktes aus stöchiometrischen Mengen (i) eines auf n-Butanol gestarteten Polyätheralkohols aus 83% Äthylenoxid und 17% Propylenoxid (MG = 1900), (ii) Hexamethylendiisocyanat und (iii) Diäthanolamin wurden bei 120°C im Wasserstrahlvakuum entwässert. Zu diesem Gemisch wurden 369,2 Teile Hexamethylendiisocyanat gegeben und die Mischung nach Anheben der Tempertur auf 100°C solange gerührt, bis der NCO-Gehalt der Schmelze 4,1% betrug. Nach dem Abkühlen auf 30°C wurden 358,2 Teile eines Oxazolidins der Formel

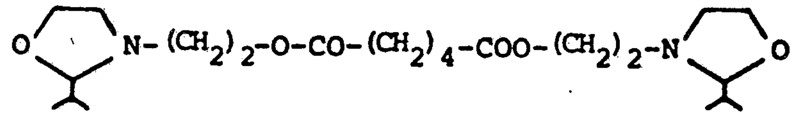

eingerührt und die Mischung anschließend unter kräftigem Rühren mit 6160 Teilen entionten Wassers versetzt. Die entstandene Dispersion hatte einen Festkörpergehalt von 30%. Die Dispersion zeigte im durchscheinenden Licht einen Tyndall-Effekt.

Beispiel 6

1192,5 Teile eines Polybutandioladipates (MG = 2250) und 137,5 Teile eines auf Bisphenol A gestarteten Propylenoxidpolyäther (MG = 550) sowie 85,5 Teile eines auf n-Butanol gestarteten

Polyätheralkohols aus 85% Äthylenoxid und 15% Propylenoxid und 85,2 Teile des in Beispiel 1 beschriebenen Addukts wurden bei 120°C im Wasserstrahlvakuum entwässert. Zu diesem Gemisch wurden bei 70°C 488,4 Teile 1-Isocyanato-3-isocyanatomethyl-3,5,5-trimethylcyclohexan gegeben und die Mischung nach Anheben der Temperatur auf 100°C solange gerührt, bis der NCO-Gehalt 5,0% betrug. Nach dem Abkühlen auf 60°C wurden 437,4 Teile eines Bisoxazolidins der Formel

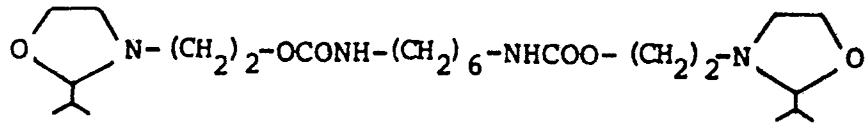

eingerührt und die Mischung anschließend unter kräfigem Rühren mit 3320 Teilen entionten Wassers versetzt. Die entstandene Dispersion hatte einen Festkörpergehalt von 40% und eine Viskosität von 18 Sekunden (Fordbecher, 4 mm). Sie zeigte im durchscheinenden Licht einen Tyndall-Effekt. Die Dispersion trocknet zu einem klaren, farblosen und elastischen Film auf, der folgende mechanische Daten besitzt:

Zugfestigkeit: 28,6 MPa
Bruckdehnung: 930%

250 Teile der Dispersion wurden mit 20 Teilen eines Butanonverkappten Triisocyanatohexylbiurets vermischt. Nach dem Auftrocknen eines Films wurde dieser 30 Minuten auf 160°C erhitzt. Die an diesem Film gemessenen mechanischen Daten waren:

Zugfestigkeit: 41,7 MPa
Bruchdehnung: 430%

Beispiel 7

500 Teile eines Polyäthylenphthalats (MG = 2000) und 332 Teile eines auf Bisphenol A gestarteten Polypropylenglykoläthers (MG = 550) sowie 13,4 Teile/Trishydroxymethylpropan und 104 Teile des in Beispiel 1 beschriebenen Addukts wurden bei 120°C im Wasserstrahlvakuum entwässert. Zu diesem Gemisch wurden bei 70°C 320 Teile Hexandiisocyanat geben und die Mischung nach Anheben der Temperatur auf 100°C solange gerührt, bis der NCO-Gehalt 4,7% betrug. Nach dem Abkühlen auf 40°C wurden 246 Teile eines Oxazolidins der Formel

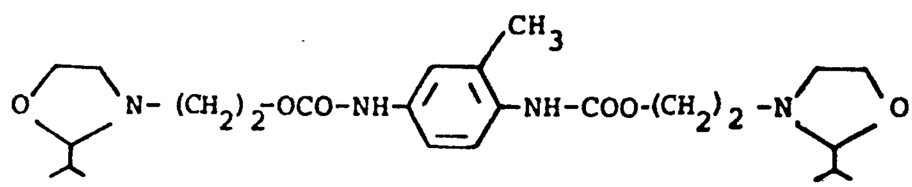

eingerührt und die Mischung anschließend unter kräftigem Rühren mit einer Mischung aus 2260 Teilen entionten Wassers und 76 Teilen Äthylenglykolmonoäthylester versetzt. Es bildete sich eine Dispersion mit einem Festkörpergehalt von 40%. Sie zeigte im durchscheinenden Licht einen Tyndall-Effekt.

Beispiel 8

552 Teile eines auf Bisphenol A gestarteten Polypropylenglykoläthers (MG = 550) wurden bei 120°C im Wasserstrahlvakuum entwässert und bei 70°C mit 320 Teilen Hexandiisocyanat vermischt. Nach dem Anheben der Temperatur auf 100°C wurde das Gemisch solange gerührt, bis der NCO-Gehalt 8,7% betrug. Die Mischung wurde auf 50°C abgekühlt und 238 Teile eines Addukts von 20 Molen Äthylenoxid an 1 Mol iso-Nonylphenol wurden in ihr aufgelöst. Nach der Zugabe von 320 Teilen eines Oxazolidins der Formel

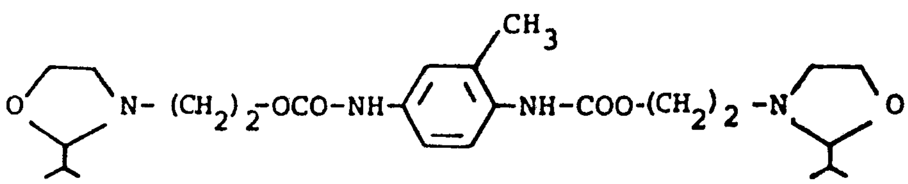

und 84 Teilen Äthylenglykolmonoäthyläther wurden unter kräftigem Rühren 2500 Teile entionten Wassers zugesetzt. Es entstand eine Dispersion mit einem Festkörpergehalt von 38%. Sie zeigte im durchscheinenden Licht einen Tyndall-Effekt. Nach dem Ausgießen und Auftrocknen bildete sich ein klarer zäher Film, der hohe Härte besäß.

Beispiel 9

556 Teile eines auf Bisphenol A gestarteten Polypropylenglykoläthers (MG = 550) und 93,6 Teile

des in Beispiel 1 beschriebenen Addukts wurden bei 120°C im Wasserstrahlvakuum entwässert. Zu diesem Gemisch wurden bei 70°C 320 Teile Hexandiisocyanat gegeben und die Mischung nach Anheben der Temperatur auf 100°C solange gerührt, bis der NCO-Gehalt 6,3% betrug. Bei 70°C wurde nach dem Vermischen mit 80 Teilen eines Oxazolidins der Formel

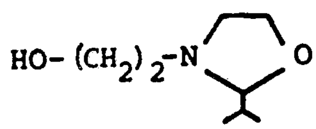

12 Stunden lang gerührt. Darauf wurden 105 Teile Äthylenglykolmonoäthyläther zugesetzt und bei 50°C 1590 Teile entionten Wassers eingerührt. Die entstandene Dispersion hatte einen Festkörpergehalt von 40% und zeigte im durchscheinenden Licht einen Tyndall-Effekt. Sie trocknete zu einem klaren zähen und glänzenden Film auf.

## Patentansprüche

1. Verfahren zur Herstellung von im wesentlichen linearen Isocyanatpolyadditionsprodukten mit seitenständigen Hydroxylgruppen durch Umsetzung von freie Isocyanatgruppen und Oxazolidingruppen aufweisenden Reaktivsystemen mit Wasser, dadurch gekennzeichnet, daß man

a) im wesentlichen lineare Präpolymere, welche endständig sowohl Isocyanatgruppen als auch Oxazolidingruppen oder

b) ein, im wesentlichen lineare NCO-Präpolymere und Bisoxazolidine aufweisendes Gemisch

durch Vermischen mit Wasser kettenverlängert, wobei die Wassermenge so bemessen wird, daß pro Mol an im Reaktionsgemisch vorliegenden Oxazolidingruppen mindestens 1 Mol Wasser vorliegt.

2. Verfahren gemäß Anspruch 1, dadurch gekennzeichnet, daß man als Präpolymere hydrophil modifizierte und/oder einen externen Emulgator enthaltende Präpolymere und einen bezüglich der Kettenverlängerungsreaktion hohen Wasserüberschuß verwendet, so daß unmittelbar eine wäßrige Dispersion bzw. Lösung der Polyadditionsprodukte erhalten wird.

## Claims

1. Process for the preparation of substantially linear isocyanate polyaddition products containing hydroxyl groups in side-chains by the reaction of reactive systems which contain free isocyanate groups and oxazolidine groups with water, characterised in that

a) substantially linear prepolymers which have both isocyanate end groups and oxazolidine end groups or

b) a mixture containing substantially linear isocyanate prepolymers and bis-oxazolidines

are chain lengthened by mixing with water, using a quantity of water calculated to provide at least 1 mol of water per mol of oxazolidine groups present in the reaction mixture.

2. Process according to claim 1, characterised in that the prepolymers used are hydrophilically modified and/or contains an external emulsifier and water is used in a large excess in the chain-lengthening reaction so that the polyaddition products are directly obtained as an aqueous dispersion or solution.

## Revendications

1. Procédé de production de polymères essentiellement linéaires d'addition d'isocyanates porteurs de groupes hydroxyl latéraux par réaction avec l'eau de systèmes réactionnels porteurs de groupes isocyanato et oxazolidino libres, caractérisé en ce qu'il consiste à allonger la chaîne, par mélange avec l'eau:

a) de prépolymères essentiellement linéaires, qui portent en position terminale tant des groupes isocyanato que des groupes oxazolidino, ou

b) d'un mélange formé de prépolymères d'isocyanates essentiellement linéaires et de bis-oxazolidines, la quantité d'eau étant calculée de manière qu'il y ait au moins une mole d'eau par mole de groupes oxazolidino présents dans le mélange réactionnel.

2. Procédé suivant la revendication 1, caractérisé en ce qu'on utilise comme prépolymères des prépolymères à modification hydrophile et/ou comportant un émulsionnant externe et un grand excès d'eau par rapport à la réaction d'allongement de chaîne, de manière à obtenir directement une dispersion ou solution aqueuse des polymères d'addition.